Europäisches Patentamt

European Patent Office

Office européen des brevets

(11) Numéro de publication: **0 177 405**

**B1**

(12) **FASCICULE DE BREVET EUROPÉEN**

(45) Date de publication du fascicule du brevet:
18.05.88

(51) Int. Cl.⁴: **H 04 M 1/27**

(21) Numéro de dépôt: **85401854.6**

(22) Date de dépôt: **24.09.85**

(54) Système de radiotéléphone, notamment pour véhicule automobile.

(30) Priorité: **02.10.84 FR 8415092**

(43) Date de publication de la demande:
**09.04.86 Bulletin 86/15**

(45) Mention de la délivrance du brevet:
**18.05.88 Bulletin 88/20**

(84) Etats contractants désignés:
**DE GB IT NL SE**

(56) Documents cité:
**EP-A-0 027 596**
**EP-A-0 045 941**

**ELEKTRONIK, vol. 7, 8 avril 1982, page VI, Münich, DE; "Spracheingaben im Behindertenfahrzeug"**
**NACHRICHTENTECHNISCHE ZEITSCHRIFT, vol. 37, no. 8, août 1984, pages 496-499, Berlin, DE; M. IMMENDÖRFER et al.: "Sprachgesteuertes Telefon mit elektronischem Telefonregisterspeicher"**
**EDN, vol. 25, no. 19, octobre 1980, pages 57-59, Boston, US; E. TEJA: "Repertory telephone dialer responds to human voice"**

(73) Titulaire: **REGIE NATIONALE DES USINES RENAULT, Boîte postale 103 8-10 avenue Emile Zola, F-92109 Boulogne- Billancourt (FR)**

(72) Inventeur: **Dubus, Daniel, 24, rue Nationale, F-78970 Mezieres Sur Seine (FR)**

(74) Mandataire: **Réal, Jacques, Régie Nationale des Usines Renault 8-10, avenue Emile Zola, F-92109 Boulogne- Billancourt (FR)**

### Description

La présente invention concerne les radiotéléphones et vise plus particulièrement un radiotéléphone pour véhicule automobile utilisant les techniques de reconnaissance et de synthèse de la parole.

A ce jour, un radiotéléphone installé à bord d'un véhicule automobile est généralement conçu comme un simple moyen de communication orale qui fait appel, pour son utilisation, à la manipulation d'un combiné muni de cellules acoustiques émettrice et réceptrice et d'un clavier pour composer les numeros. La pratique de ces opérations à bord de véhicules automobiles induit des difficultés pour la conduite, tant sur le plan de la sécurité que du confort. C'est la raison pour laquelle ces opérations sont généralement effectuées à faible vitesse du véhicule, voire même à l'arrêt. De ce fait, les difficultés rencontrées conduisent à une limitation importante des possibilités que pourrait offrir un radiotéléphone à bord d'un véhicule automobile.

On connait par ailleurs des installations téléphoniques dites "mains libres". Il s'agit en général d'un poste téléphonique classique permettant de converser à une certaine distance. Récemment, certaines installations de ce genre ont été équipées d'un système de reconnaissance et de synthèse de la parole pour réaliser des opérations de composition de numéro ou de recherche de numéros mémorisés préalablement.

Toutefois, ces solutions de téléphone dit "mains libres" ne permettent pas de résoudre tous les problèmes posés, pour des raisons de sécurité et d'ergonomie notamment, par l'utilisation d'un radiotéléphone à bord d'un véhicule automobile. En outre, ces téléphones "mains libres" n'exploitent que faiblement les possibilités offertes par les techniques de reconnaissance et de synthèse de la parole dont une application aux véhicules automobiles est décrite, par exemple, dans les demandes de brevets FR-A-2 533 513 et FR-A-2 559 325.

Le but de l'invention est de résoudre les problèmes précités et de fournir un système de radiotéléphone "mains libres" mettant en oeuvre un processus élaboré de dialogue Homme-Machine à composante orale.

A cet effet, l'invention a pour objet un système de radiotéléphone à commande vocale, notamment pour véhicule automobile, comprenant un radiotéléphone proprement dit associé à un système de reconnaissance de la parole, caractérisé en ce que le système de reconnaissance de la parole comprend des moyens pour capter à distance, traiter et transmettre la parole d'un utilisateur placé dans un milieu perturbé et un module de reconnaissance d'un vocabulaire de commande par l'utilisateur de différents modes de fonctionnement du système, une unité centrale connectée audit module de reconnaissance de la parole et à un ensemble de mémoires pour commander la composition automatique de numéros de téléphone sur le radiotéléphone en réponse à la reconnaissance par ledit module desdits numéros ou de mots-clés associés à des numéros de téléphone mémorisés, un module de synthèse de la parole figée adapté pour générer, sous la commande de l'unité centrale, des messages mémorisés de manière permanente, un module pour l'enregistrement de messages vocaux non permanents à partir des moyens de captage de la parole ou du radiotéléphone et pour la lecture desdits messages par l'intermédiaire du radiotéléphone ou de moyens de restitution d'information vocale dans ledit milieu de l'utilisateur, des moyens de sélection de modes de fonctionnement du système et un module d'interface piloté par l'unité centrale pour commander les liaisons entre lesdits modules et moyens du système.

D'autres caractéristiques et avantages de l'invention ressortiront de la description qui va suivre, faite en se référant aux dessins annexés sur lesquels:

- la figure 1 est un schéma synoptique général du système de radiotéléphone "mains libres" suivant l'invention ;

- la figure 2 est un schéma-bloc d'un module d'aiguillage de signaux de parole et de signaux basse-fréquence ;

- la figure 3 représente l'organigramme principal d'exploitation du système de radiotéléphone "mains libres" ;

- la figure 4 est un organigramme illustrant le mode "apprentissage du vocabulaire" pour un fonctionnement minimal ;

- la figure 5 est un organigramme illustrant l'exploitation d'un répertoire ;

- la figure 6 est un organigramme illustrant la lecture du répertoire ;

- la figure 7 est un organigramme illustrant les différents cas rencontrés pour composer un numéro de téléphone afin d'obtenir une communication téléphonique ;

- la figure 8 est un organigramme illustrant la lecture ou l'effacement des messages en mode de fonctionnement "bloc-note" ou messagerie ;

- la figure 9 est un organigramme illustrant la création de messages dans le "bloc-note" ;

- la figure 10 est un organigramme illustrant l'établissement d'une communication téléphonique ;

- la figure 11 est un organigramme illustrant l'exploitation du radiotéléphone en mode normal ou en mode poste de travail en présence d'un appel extérieur.

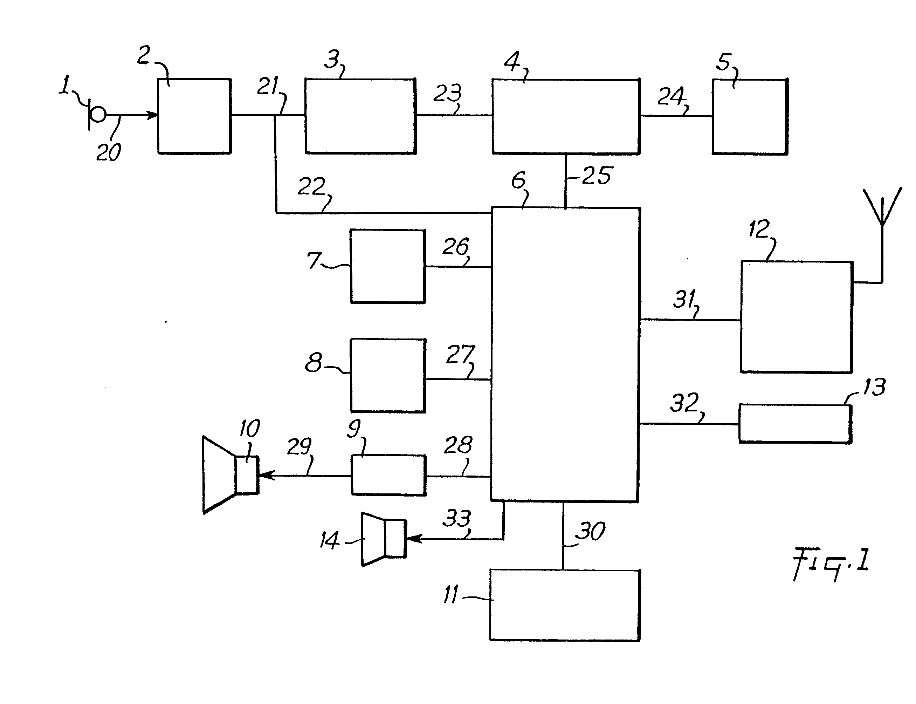

En se reportant à la figure 1, le système de radiotéléphone "mains libres" comprend un système de prise de son 1 tel que, par exemple, celui décrit dans la demande de brevet FR-A-2 559 325, connecté par une liaison 20 à un bloc de traitement de signal 2 assurant des fonctions de filtrage et d'amplification. Le bloc 2 est relié par une liaison 21 à un système de reconnaissance de la parole 3 qui est géré, via une liaison 23, par une unité centrale 4. Cette unité centrale, via la liaison 24, gère des mémoires 5, mortes ou vives, sauvegardées ou non. L'unité centrale 4 est connectée par une liaison 23 à un module d'interface 6 qui est lui même connecté au bloc de traitement de signal 2 par une liaison 22. L'unité centrale 4 déroule un programme et, par l'intermédiaire de l'interface 6 et de différentes liaisons 26, 27, 28, 29, 30, 31, 32 et 33, met en relation différents organes comprenant :

- un bloc 7 de synthèse de la parole figée,
- un block 8 de synthèse de la parole non figée,
- un bloc 9 représentant un autoradio comprenant un syntoniseur et des amplificateurs de puissance suivis de haut-parleurs 10,
- un bloc 11 représentant des contacts électriques,
- un bloc 13 représentant un système d'affichage, et
- un bloc 12 représentant le radiotéléphone proprement dit.

A titre d'exemple, les matériels suivants peuvent être utilisés pour réaliser le système de radiotéléphone de la figure 1 :

-un système de prise de son 1 tel que décrit dans la demande de brevet FR-A2 559 325,
- le système RMI 88, de la société VECSYS, de reconnaissance de la parole en mots isolés, pour le système 3,
-le système ISBC 80/24 de la société INTEL pour l'unité centrale 4,
-le système PSM 6463 de la société PLESSEY pour la partie mémoire sauvegardée du bloc 5, dont le complément est inclus sur la carte ISBC 80/24,
- un circuit synthétiseur de la parole 5220 A de la société TEXAS INSTRUMENT pour le bloc 7,
- un circuit HC 55564, de la société MATRA-HARRIS semiconducteurs, qui utilise les techniques de modulation et de démodulation Delta pour le bloc 8. Pour le filtrage autour de ce circuit, on peut soit prendre une technique classique de filtres analogiques, soit le circuit HC 5512C de la même société. Le circuit modulateur/démodulateur possède une entrée d'horloge permettant de faire très facilement de la synthèse entre 9 kbits/s et 64 kbits/s et donc de choisir le compromis voulu entre la qualité de la synthèse et l'espace mémoire utilisé.

- un autoradio tel que celui de la société PHILIPPS équipant les véhicules R11 Electronique de la Régie Nationale des Usines Renault pour les blocs 9 et 10,
-un écouteur miniature adaptable à l'oreille du conducteur pour le haut-parleur confidentiel,
- un radiotéléphone 450 MHZ de la société THOMSON pour le bloc 12,
- un afficheur HDSP-8716 la société HEWLET-PACKART pour le bloc 13,
- un ensemble conventionnel de relais, filtres et amplificateurs pour le bloc 6,
- différents types de liaisons: serie, parallèle, multibus, analogiques pour les liaisons 20, 21, 22, 23, 24, 25, 26, 27, 28, 29, 30, 31, 32 et 33,
- différents contacts pour le bloc 11, à savoir:

- un contact de mise sous tension à deux positions, normale ou veille,
- un contact de selection de mode automatique/manuelle,
- un contact fugitif pour effectuer une interruption sur le logiciel afin d'arrêter soit un mode, soit une communication téléphonique,
- un contact fugitif pour enregistrer des messages sur le bloc-note, et
- un contact de sélection d'écoute générale ou d'écoute confidentielle.

Tous les matériels cités ci-dessus peuvent être remplacés par d'autres offrant des services équivalents. Cette première description montre que l'invention minimise les interventions visuelles ou manuelles du conducteur.

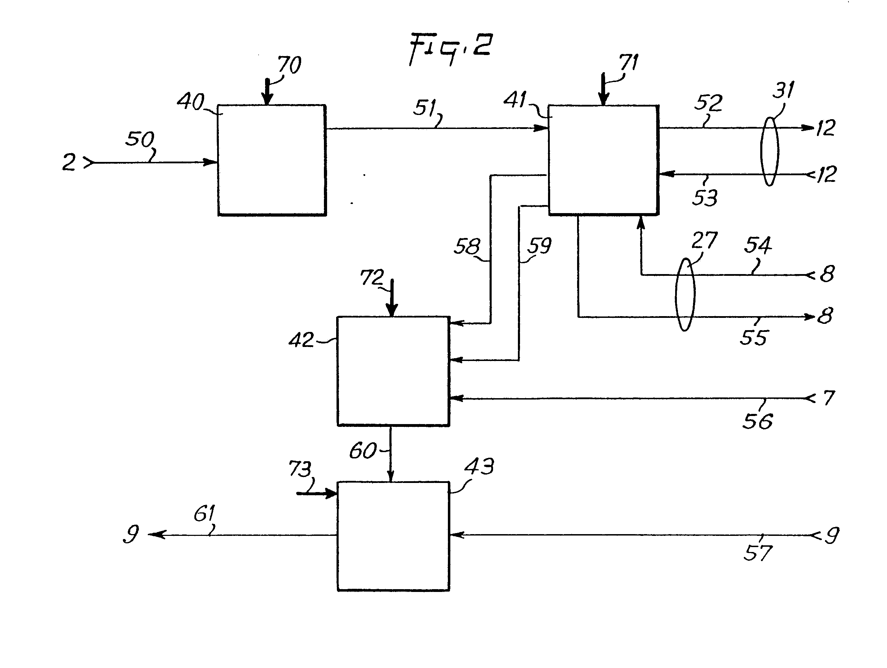

La figure 2 montre les blocs principaux 40, 41, 42 et 43, constitués de relais, de filtres et d'amplificateurs, du module d'aiguillage. Ces blocs, qui font partie du module d'interface 6 de la figure 1, sont pilotés par des signaux de commande et de contrôle 70, 71, 72 et 73 qui correspondent à la liaison 25 et proviennent de l'unité centrale 4 de la figure 1.

Le signal véhiculé par la liaison 50, correspondant à la liaison 22 de la figure 1, est un signal analogique de parole représentant la voix du conducteur. Après passage dans le bloc 40, ce signal de parole est appliqué au bloc 41 par la liaison 51. Ce signal est aiguillé par le bloc 41 soit vers le radiotéléphone 12 par l'intermédiaire de la liaison 52, soit vers le modulateur delta 8 par l'intermédiaire de la liaison 55. Le premier cas correspond à celui d'une communication téléphonique, le deuxième à celui d'une utilisation pour la création des mots clés pour le répertoire ou de messages pour le bloc-note.

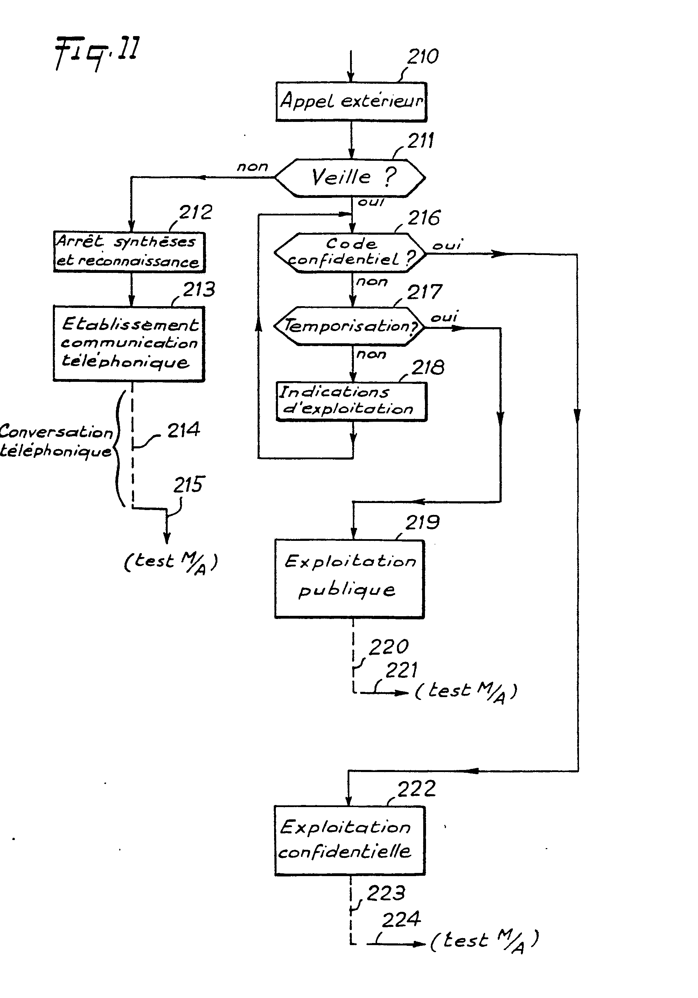

Le signal véhiculé par la liaison 53 provenant du radiotéléphone 12 peut représenter soit de la parole, soit des informations numériques. Ce signal est aiguillé, via le bloc 41, soit vers l'amplificateur de l'autoradio 9 par la liaison 58, soit vers le modulateur delta 8 par la liaison 55. Le premier cas correspond à une communication téléphonique, le deuxième à la création de messages pour l'application poste de travail quand le radiotéléphone est en position de veille. Cet aspect du système sera décrit plus en détail en regard de la figure 11.

Le signal véhiculé par la liaison 54 et provenant du démodulateur delta 8 est aiguillé, via le bloc 41, soit vers le radiotéléphone 12 par la liaison 52, soit vers l'amplificateur de l'autoradio 9 par la liaison 59. Le premier cas correspond à l'application poste de travail, le deuxième cas à l'écoute des mots-clés du répertoire ou des messages du bloc-note.

Le signal véhiculé par la liaison 56 et provenant du circuit de synthèse 7 est envoyé ou non vers l'amplificateur de l'autoradio 9. Les messages figés qu'il représente correspondent soit à des questions, soit à des réponses suivant le dialogue homme-machine vocal en cours entre le conducteur et le système de radiotéléphone.

La liaison 60 véhicule l'un des signaux éventuellement présents sur les liaisons 58, 59, 56, via le bloc 42. Le signal véhiculé par la liaison 57 provient du syntoniseur de l'autoradio 9 et est envoyé, suivant qu'un signal est présent ou non sur la liaison 60, via le bloc 43, à l'amplificateur de l'autoradio 9 par la liaison 61.

Le signal présent sur la liaison 61 peut donc représenter soit un signal de radiotéléphone provenant de la liaison 53, soit de la synthèse non figée dite delta provenant de la liaison 54, soit de la synthèse figée L.P.C. provenant de la liaison 56, soit un signal du syntoniseur de l'autoradio provenant de la liaison 57. A défaut de présence de l'un de ces signaux, la liaison 61 peut ne véhiculer aucun signal.

En variante, l'autoradio 9 peut être séparé des trois sources précitées et des moyens conventionnels peuvent être prévus pour agir simplement sur le niveau sonore de l'autoradio, le signal véhiculé par la liaison 60 étant alors injecté directement dans un ensemble amplificateur de puissance-haut-parleur(s) séparé.

Chacun des blocs 40, 41, 42 et 43 possède son système d'amplification et de filtrage car chaque source de signal (radiotéléphone, synthèse de la parole, microphone, syntoniseur) à un niveau et un gabarit spectral qui lui est propre.

La figure 3 représente l'organigramme principal de fonctionnement du système de radiotéléphone en utilisation normale et se compose de deux parties distinctes: la phase manuelle et la phase automatique, cette dernière correspondant à l'exploitation normale du système.

L'étape 100 représente l'initialisation du système, à savoir les différentes initialisations des blocs principaux décrits dans la figure 1 et des entrées - sorties.

L'étape 101 est un test sur le mode de fonctionnement choisi, manuel ou automatique. Dans le cas d'un mode automatique, on passe au test 102 qui boucle sur lui-même en attendant la reconnaissance d'un mot qui peut être TELEPHONE, LECTURE, BLOC-NOTE ou AIDE. Ces mots sont donnés à titre d'exemple, mais le conducteur peut choisir toute autre forme acoustique comme le permet le système de reconnaissance de la parole. Une non reconnaissance du mot prononcé entraîne le fait que l'on reboucle sur le bloc 102.

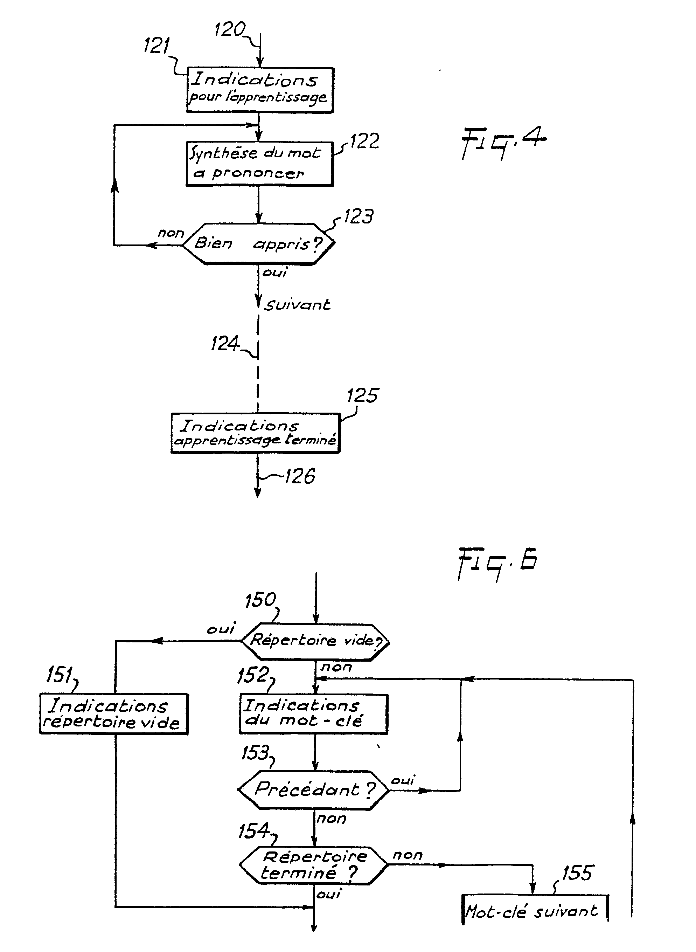

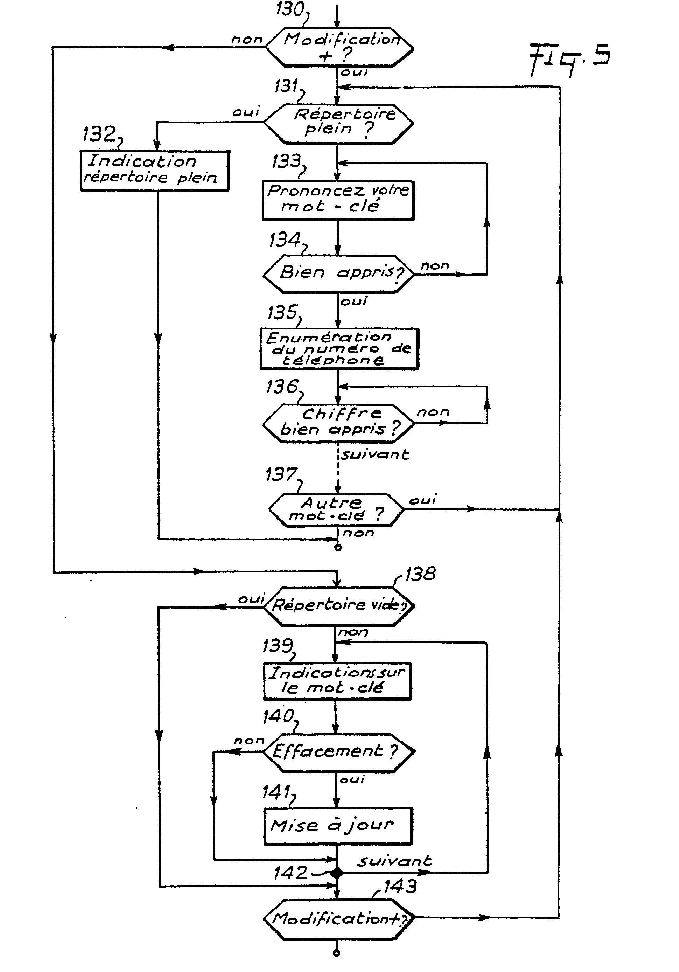

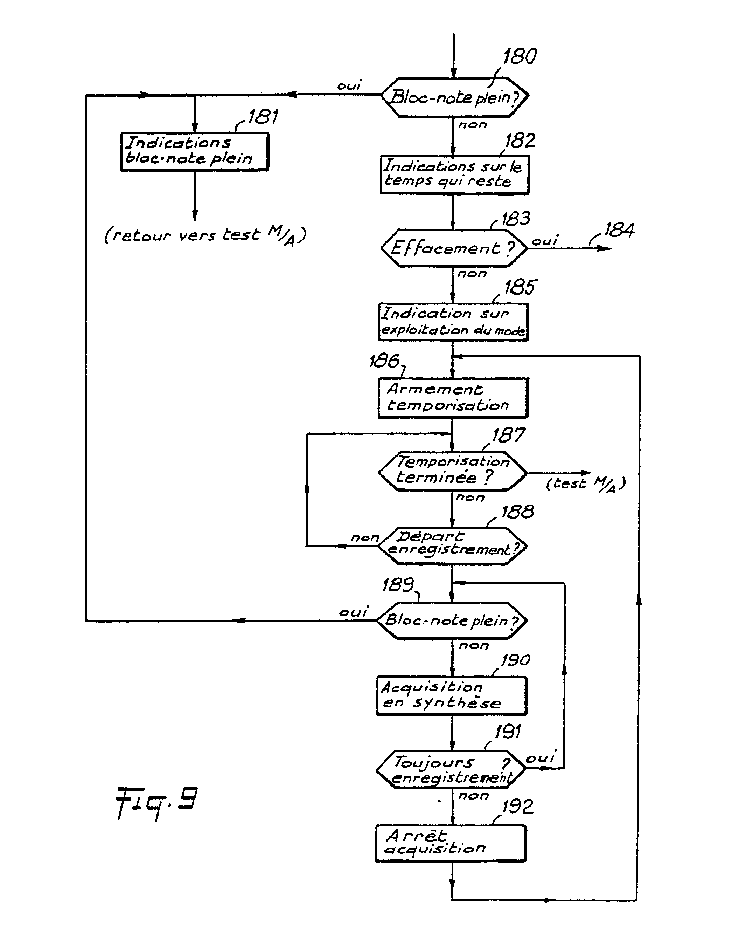

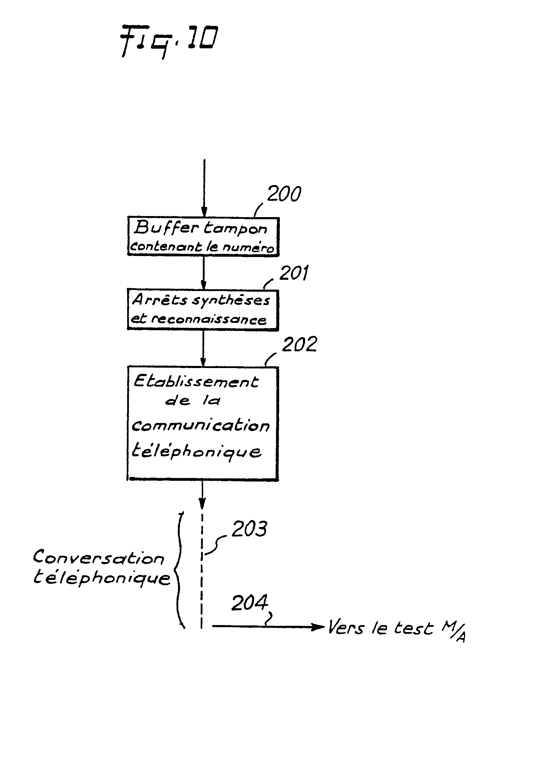

Si le mot TELEPHONE a été prononcé, on exécute le bloc 103 qui est décrit plus en détail aux figures 7 et 10. Si le mot LECTURE est prononcé, on exécute le bloc 104 qui est décrit plus en détail à la figure 6. Si le mot BLOC-NOTE est prononcé, on exécute le bloc 105 qui est décrit plus en détail à la figure 9. Si le mot AIDE est prononcé, on exécute le bloc 106 qui consiste à sortir en synthèse figée l'ensemble des messages et la façon d'utiliser le système de radiotéléphone. Tous ces modes rebouclent ensuite sur le test 102. L'interruption 115 peut être déclenchée à tout moment en commutant le bouton manuel/automatique. Cette interruption 115 peut aussi être déclenchée à tout moment par un contact fugitif pour abandonner un mode en cours de route, et entre autre, arrêter une communication téléphonique. Cette dernière solution est plus souple que celle où on le fait par une commande vocale mais cette variante est tout à fait possible.

Si le test 101 identifie un mode manuel, on exécute l'étape 107 qui correspond à l'émission d'un message en synthèse de la parole figée indiquant que l'on est en mode manuel. Cette étape peut également correspondre à l'émission d'un message visuel sur le dispositif d'affichage 13.

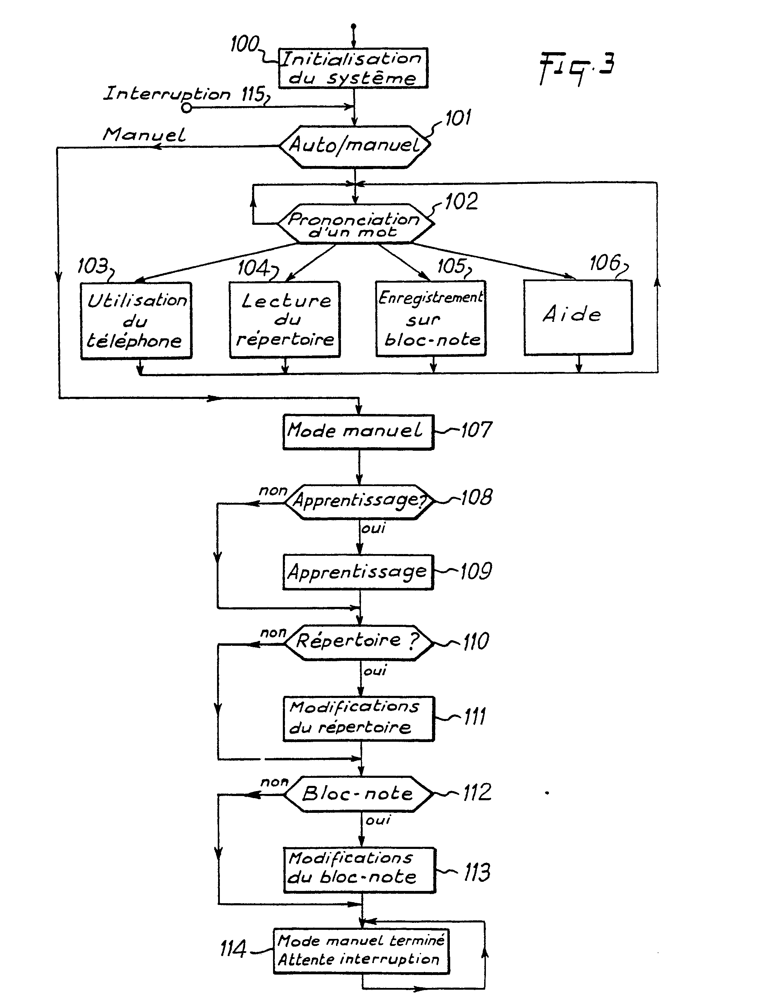

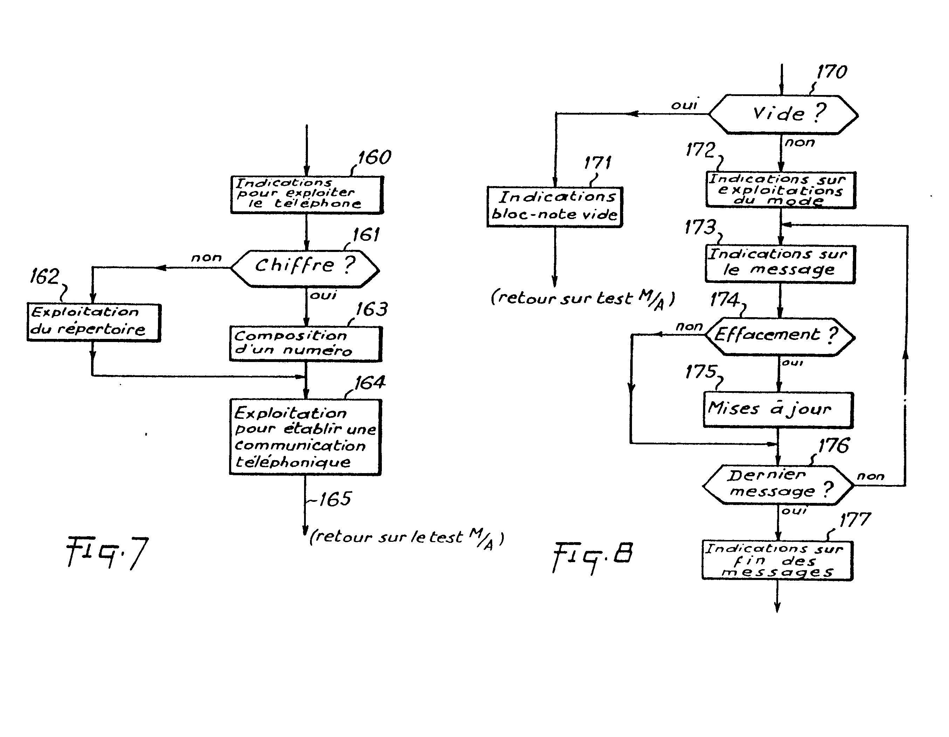

On passe ensuite au test 108 où on pose la question "Voulez-vous un apprentissage?" par synthèse figée (bloc 7) et l'on teste, via le bloc 3 de reconnaissance la parole, la réponse positive ou négative du conducteur. Dans le cas où l'apprentissage n'a jamais été fait ou a été effacé, la reconnaissance sur les mots OUI ou NON (cités à titre d'exemple) ne peut se faire et l'on force un apprentissage, représenté par le bloc 109 et décrit plus en détail à la figure 4. Sinon on passe au test 110 où on pose la question, par synthèse figée, de la création d'un mot-clé dans le répertoire. Si la réponse est positive, on exécute l'étape 111 décrite plus en détail à la figure 5. Sinon on passe au test 112 où on pose la question de la lecture des messages du bloc-note. Si la réponse est positive, on exécute le bloc 113 qui est décrit plus en détail à la figure 8. Sinon on termine sur un message par synthèse de la parole figée invitant l'utilisateur à quitter le mode manuel et représenté par le bloc 114. Cette opération se fera en commutant le bouton de sélection de mode de la position manuelle sur la position automatique.

La figure 4 illustre la procédure d'apprentissage (bloc 109 de la figure 3). Par 120, on arrive sur le bloc 121 qui est un ensemble de messages vocaux générés par synthèse figée expliquant la procédure. Ensuite, le bloc 122 correspond à l'émission, en synthèse figée, du mot que l'on doit apprendre. Le bloc 123 représente l'apprentissage du mot et le test déterminant si le mot a bien été prononcé par le locuteur. En cas de mauvais apprentissage, on revient à l'étape 122, sinon on passe au mot suivant. La procédure 122, 123 est répétée autant de fois qu'il y a de mots et est indiquée par 124. Au cours de cette procédure, on affiche simultanément sur le dispositif d'affichage 13 le mot à apprendre. Puis on passe à l'étape 125 qui correspond à l'émission d'un message de synthèse vocale figée annonçant que la phase d'apprentissage est terminée et 126 conduit au bloc 110 de la figure 3. Le vocabulaire ainsi appris correspond au fonctionnement minimal du système de radiotéléphone.

Une variante possible est d'éviter cette phase d'apprentissage en utilisant pour le bloc 3 un système de reconnaissance de la parole multilocuteur. Cette solution a toutefois pour inconvénient de priver le conducteur de la liberté de choisir les formes acoustiques qu'il désire et

de ne pas permettre de créer pour chaque langue différente un vocabulaire associé, ce qui retire au système son caractère universel. Par contre, une partie mémorisée de la synthèse figée (bloc 7) est alors éliminée.

La figure 5 décrit l'exploitation du répertoire au niveau de la création ou de l'effacement d'un mot-clé. On définit un mot-clé comme une forme acoustique à laquelle on associe un numéro de téléphone. Ainsi, à chaque fois qu'un mot-clé sera reconnu par le système, le numéro de téléphone associé sera composé automatiquement, ce qui évite d'égrener le numéro chiffre à chiffre. Toutefois, quant une liste de mots-clés est trop importante, l'utilisateur risque, au bout d'un certain temps, d'en oublier une partie. On peut songer, pour palier à ce défaut, à noter par écrit, au fur et à mesure, les créations ou modifications de ce répertoire. On s'aperçoit rapidement de la lourdeur d'une solution de ce type et l'un des buts de l'invention est de résoudre ce problème en permettant d'enregistrer au fur et à mesure ces mots-clés et de les restituer sous forme vocale au conducteur.

Une première solution consisterait à utiliser un magnétophone classique, mais les problèmes d'effacement et d'enregistrement deviendraient très rapidement lourds à gérer.

Une autre solution consisterait à utiliser le même algorithme pour la reconnaissance et la synthèse de la parole, mais les circuits disponibles actuellement ne permettent pas de faire de manière simple de la synthèse en temps réel. De plus il ne faut pas oublier que le conducteur choisit librement les mots-clés qu'il désire et on ne peut pas lui demander de composer sur un clavier alphabétique l'orthographe de ces mots-clés afin d'en avoir un contrôle visuel. Pour que le radiotéléphone soit "mains libres", ce contrôle ne peut être fait que d'une façon orale.

Au regard des caractéristiques techniques du circuit modulateur/démodulateur delta (bloc 8), une mise en oeuvre de ce type de synthèse est très aisée à réaliser et autorise de façon très souple le choix de la qualité de restitution vocale désirée.

L'étape 130 est un test où l'on demande au locuteur, au moyen d'un message émis en synthèse figée (bloc 7), s'il veut ajouter un mot-clé au répertoire. Dans l'affirmative, on passe au test 131 où l'on détermine si le répertoire est plein. Si cette dernière éventualité est réalisée, le conducteur en est averti à la fois par synthèse figée et affichage (étape 132), puis on continue en séquence dans l'organigramme principal (fig. 3). Si le répertoire n'est pas plein, le bloc 133, par un message en synthèse figée, invite le conducteur à prononcer le mot-clé. Le bloc 134 lance à la fois l'apprentissage et le modulateur delta 8 et teste si l'apprentissage a été correct. Dans le cas d'un mauvais apprentissage, on reboucle sur 133. Sinon on invite le conducteur, en 135, à énumérer les chiffres qui composent le numéro de téléphone associé. Le bloc 136 représente cette phase d'apprentissage des chiffres au cours de laquelle le système est en phase de reconnaissance et un écho par synthèse figée du chiffre prononcé est renvoyé au conducteur pour servir de vérification. De plus, un contrôle visuel peut être effectué par affichage du chiffre sur le dispositif d'affichage 13.

Cette opération d'apprentissage terminée, on passe à l'étape 137 où on teste si le conducteur désire créer un autre mot-clé. Dans la négative, on poursuit en séquence dans l'organigramme principal (fig. 3). Sinon on reboucle sur le test 131.

En cas de réponse négative au test 130, on passe à l'étape 138 pour tester si le répertoire est vide. Une réponse positive amène au test 143 ou on offre à l'utilisateur la possibilité de rajouter des mots-clés. Sinon on sort en synthèse delta le premier mot-clé, à l'étape 139, et l'on demande au conducteur, à l'étape 140, s'il veut l'effacer. Si la réponse est positive, l'étape 141 assure la remise à jour dans le répertoire et le système de reconnaissance de la parole. Ensuite, le test 142 permet de balayer successivement tous les mots-clés du répertoire, après quoi on passe à l'étape 143. Si la réponse à l'étape 140 est négative, on passe directement au test 142.

L'analyse de l'organigramme de la figure 5 montre que les opérations décrites se font sans intervention manuelle. La seule qui peut survenir à tout moment est l'interruption faite par le conducteur qui décide d'abandonner en cours de route ce mode. A tout moment, des informations visuelles apparaissant sur le système d'affichage 13 peuvent venir compléter les messages vocaux de synthèse figée émis par le bloc 7.

La figure 6 décrit la procédure de lecture du répertoire, représentée par le bloc 104 de la figure 3. Le test 150 permet de déterminer si le répertoire est vide et, dans l'affirmative, on passe à l'étape 151 où l'on émet un message de synthèse figée correspondant, après quoi on poursuit en séquence le progamme principal (figure 3). Sinon, on émet, par synthèse delta, le premier mot-clé, puis on affiche le numéro de téléphone associé (étape 152). Le test 153 permet de revenir en arrière, à l'étape 152, par reconnaissance de la parole. Si l'on ne revient pas en arrière, on passe au test 154 où l'on examine si l'on est arrivé à la fin du répertoire. Dans la négative, on passe à l'étape 155 où l'on va chercher le mot-clé suivant puis on revient à l'étape 152 où ce nouveau mot-clé est énoncé en synthèse delta.

Une variante de l'étape 152 serait d'émettre, en synthèse figée, le numéro de téléphone associé, conjointement ou en remplacement de son affichage 13.

La figure 7 décrit la procédure qui se déroule lorsque le mot TELEPHONE a été reconnu et correspond au bloc 103 de la figure 3. A l'étape 160, le système émet, par l'intermédiaire du bloc 7 de synthèse figée, un message pour inviter le conducteur à composer un numéro de téléphone.

Le conducteur a le choix de prononcer soit un chiffre, soit un mot-clé (étape 161). Si un mot-clé a été reconnu, on passe à l'étape 162 où on exploite le répertoire pour aller chercher le numéro correspondant. Sinon dès le premier chiffre prononcé, on passe à l'étape 163 où le conducteur égrène un par un les chiffres, cette étape comportant des tests (non représentés) suivant les différents cas de longueur de numéro rencontrés, de non-reconnaissance et de correction dans le cas d'une erreur. L'étape suivante 164 correspond à l'exploitation, après obtention du numéro de téléphone, et est décrite plus en détail à la figure 10. Puis, l'étape 164 terminée, on passe à l'étape 165 qui correspond au retour sur le test manuel/automatique 101.

La figure 8 illustre la procédure de lecture et d'effacement des messages du bloc-note. Ces messages, pour les mêmes raisons que celles exposées à propos des mots-clés, sont réalisés en faisant appel au bloc 8 de modulation/démodulation delta.

Le test 170 a pour objet de déterminer si le bloc-note est vide et, dans l'affirmative, on passe à l'étape 171 où l'on émet le message correspondant au moyen de la synthèse figée et/ou d'un affichage visuel, puis on retourne au test manuel/automatique (101, figure 3).

Dans le cas où le bloc-note n'est pas vide, des indications sur l'exploitation du mode en cours sont émises par le bloc 7 de synthèse figée à l'étape 172. La différence entre un mot-clé et un message est que le premier est toujours enregistré sur un temps fixe. Le premier message mémorisé est émis par le bloc 8 de synthèse delta à l'étape 173 et le test suivant 174 vérifie, par la reconnaissance de la parole, si le conducteur veut l'effacer. Dans l'affirmative, l'étape 175 de mise à jour consiste à réactualiser les zones mémoires adéquates. Le test 176 vérifie si l'on est arrivé au dernier message. Dans l'affirmative, on émet à l'étape 177 un message en synthèse figée indiquant cet état de fait, avec affichage éventuellement, et on poursuit en séquence. Sinon on boucle sur le message suivant en allant en 173.

La figure 9 décrit la procédure 105 de la figure 3 qui consiste à créer des messages dans le bloc-note. On teste, par 180, si le bloc-note est plein, c'est-à-dire s'il reste assez de place mémoire pour faire de l'enregistrement. Si tel n'est pas le cas, on exécute l'étape 181 ou on émet l'indication correspondante par synthèse figée et/ou affichage, puis on poursuit en séquence sur le test manuel - automatique. En général, dans ce cas, le conducteur passera en mode manuel pour aller supprimer des messages qu'il considère inutiles s'il désire en rajouter d'autres.

Si le bloc-note n'est pas plein, on passe à l'étape 182 où l'on indique au conducteur le temps d'enregistrement disponible qui lui est imparti, par synthèse figée et/ou par affichage en représentation barre-graphe horizontale dont la longueur est proportionnelle au temps d'enregistrement disponible. A l'étape 183, on teste si le conducteur veut effacer des messages et, dans l'affirmative, on retourne par le branchement 184 à l'étape 170 de la figure 8. Sinon, on exécute l'étape 185 qui consiste à émettre, par synthèse figée et/ou affichage, des indications sur l'exploitation du mode.

L'étape suivante 186 permet d'armer une temporisation et le test 187 assure un retour sur le test manuel/automatique dans le cas où la temporisation est terminée et qu'aucune action n'a été entreprise. Sinon on passe à l'étape 188 où l'on teste si le conducteur a appuyé sur le bouton fugitif de début d'enregistrement. Dans la négative, on reboucle sur le test 187, pendant la durée de la temporisation. Dans l'affirmative, dès que l'on a appuyé sur le contact fugitif, on passe à l'étape 189 où l'on teste le contenu de la mémoire disponible pour l'enregistrement. Si ce test indique qu'il reste très peu de mémoire, on passe à l'étape 181.

Dans le cas contraire, on fait à l'étape 190 l'acquisition du débit binaire émis par le bloc modulateur delta 8 au rythme de la fréquence d'horloge qui a été imposée (le conducteur peut, au détriment de la place mémoire, augmenter la gamme de fréquences pour améliorer la qualité de la parole qui sera restituée, ou vice versa). Entre deux acquisitions du débit binaire du bloc modulateur delta 8, on exécute le test 191 pour surveiller si l'on maintient toujours la pression sur le contact fugitif. Dans l'affirmative, on revient à l'étape 189. Sinon, on considère que le conducteur a terminé son message et on passe à l'étape 192 afin d'arrêter l'acquisition en synthèse delta et d'archiver les espaces mémoires. On retourne ensuite à l'étape 186 avec indication visuelle du temps d'enregistrement restant.

La figure 10 décrit la procédure d'établissement d'une communication téléphonique et explicite plus en détail le bloc 164 de la figure 7. Une fois le numéro de téléphone désiré obtenu (soit par énonciation d'un mot-clé, soit par un égrenage chiffre par chiffre), l'étape 200 représente la validation de ce numéro dans une mémoire tampon de commande. Puis, l'étape 201 assure l'inhibition de la reconnaissance et de la synthèse de la parole et la commutation voulue du bloc 6 de la figure 1.

Ensuite, le numéro est envoyé sur le clavier du radiotéléphone 12 en respectant son processus de commande. Une première solution consiste à utiliser des relais en parallèle avec les différentes touches du clavier. Une autre solution possible est d'exploiter la liaison série existante sur ce type de radiotéléphone. Une fois le numéro envoyé, ce type de radiotéléphone se charge de tester sa connection sur le réseau public et de la composition du numéro. L'interface 6 de la figure 1 comprend des filtres de type P.L.L. (Boucle à verrouillage de phase) permettant de tester, soit une sonnerie d'appel, soit une occupation de ligne et le système, via cette interface 6, connecte la liaison téléphonique en "décrochant" le combiné, conformément aux explications données en regard de la figure 2. Toutes ces opérations sont représentées par l'étape 202. La durée de la conversation téléphonique est représentée par 203. L'intervention manuelle 204 du conducteur arrête la communication téléphonique en réalisant une interruption et un retour sur le test manuel/automatique. En variante, l'arrêt de la communication pourrait être réalisé au moyen de la reconnaissance de la parole.

La figure 11 explicite l'utilisation du radiotéléphone "mains libres" en mode normal ou en mode poste de travail pour un appel extérieur. Comme expliqué auparavant, la présence du répertoire et du bloc-note combiné à la synthèse delta introduit déjà une approche de poste de travail. Bien entendu, il est toujours possible de connecter d'autres organes très différents afin de compléter cette fonction.

Le bloc 210 représente un appel extérieur qui est détecté sur la base du filtre et du circuit P.L.L. (Boucle à verrouillage de phase) et qui déclenche une interruption. Ce bloc 210 représente aussi la commutation des différents éléments de l'interface 6 de la figure 1 de façon à assurer la liaison téléphonique. Puis, en 211, on teste la position du contact arrêt / normal / veille. Si l'on est en position normale, on passe à l'étape 212 où l'on inhibe la reconnaissance et la synthèse de la parole et on établit la liaison téléphonique, phase représentée par le bloc 213. Bien entendu, cette liaison n'est effectuée que si le conducteur n'est pas déjà en conversation téléphonique. Certains aménagements (non représentés) sont réalisés au niveau du logiciel pour que cette interruption ne coupe pas certaines opérations comme, par exemple, la création d'un message du bloc-note ou d'un mot-clé dans le répertoire. Différentes variantes peuvent être prévues à ce stade. La conversation téléphonique 214 est arrêtée par le conducteur en faisant une interruption 215 et on retourne ensuite sur le test manuel/automatique.

Si une position veille est détectée au test 211, le radiotéléphone sera utilisé en fonction "répondeur", soit à accès confidentiel, soit à accès publique. A l'étape 216, on teste si le système fonctionne en mode confidentiel. Dans l'affirmative, on passe à l'étape 222 où plusieurs variantes de code confidentiel peuvent être envisagées, par exemple l'envoi d'une série de fréquences ou l'utilisation de la reconnaissance de la parole, la première étant plus facile à mettre en oeuvre. Dans le cas d'une détection du code confidentiel, on exécute l'exploitation confidentielle consistant par exemple, à permettre l'écoute de certains messages du bloc-note ou l'enregistrement sur ce bloc-note de message par le biais du bloc 8 de synthèse delta. Bien entendu, on peut partitionner l'accès de certains messages.

Ces opérations se font sans déranger le conducteur : en effet, si on se réfère à la figure 2, on remarque que les connections 52 - 54 et 53 - 55 peuvent être établies sans perturber la connection 57 - 61 par exemple.

La communication téléphonique 223 sera arrêtée en 224, lorsqu'on détectera que le correspondant en liaison avec le radiotéléphone a raccroché, sur la base d'une détection de tonalité ou de sonnerie. On revient ensuite au test manuel/automatique 101.

Si le test 216 donne un résultat négatif, on passe à l'étape 217 qui teste une temporisation armée préalablement. Durant cette temporisation, on exécute l'étape 218 qui représente un ensemble d'indications d'exploitation fournies au correspondant par le bloc 7 de synthèse figée. La temporisation terminée, on passe à l'étape 219 qui représente l'exploitation publique du système. Ici plusieurs variantes sont possibles qui sont classiquement connues sur les répondeurs. On peut, par exemple, utiliser un magnétophone d'enregistrement de messages commandé par le système dans le but d'économiser l'espace mémoire. Le conducteur peut alors exploiter ces enregistrements ultérieurement en créant, par exemple, sur son bloc-note, des messages en synthèse delta qui correspondent à des résumés brefs des messages reçus et enregistrés sur magnétophone. On peut également enregistrer directement les messages du correspondant dans le bloc-note par l'intermédiaire du bloc 8 de synthèse non figée si l'espace mémoire le permet. La conversation téléphonique 220 est arrêtée en 221 de la même manière qu'en 224 et l'on retourne au test manuel/automatique.

Il apparaît que le système de radiotéléphone suivant l'invention ne nécessite pas l'utilisation d'un combiné téléphonique classique et libère donc à peu près complètement les mains de l'utilisateur. Ses seules interventions manuelles sont celles décrites ci-dessus pour actionner les différents contacts prévus.

**Revendications**

1. Système de radiotéléphone à commande vocale, notamment pour véhicule automobile, comprenant un radiotéléphone proprement dit (12) associé à un système de reconnaissance de la parole (1-3), caractérisé en ce que le système de reconnaissance de la parole comprend des moyens (1, 2) pour capter à distance, traiter et transmettre la parole d'un utilisateur placé dans un milieu perturbé et un module (3) de reconnaissance d'un vocabulaire de commande par l'utilisateur de différents modes de fonctionnement du système, une unité centrale (4) connectée audit module (3) de reconnaissance de la parole et à un ensemble de mémoires (5) pour commander la composition automatique de numéros de téléphone sur le radiotéléphone en réponse à la reconnaissance par ledit module (3) desdits numéros ou de mots-clés associés à des numéros de téléphone mémorisés, un module (7) de synthèse de la parole figée adapté pour générer, sous la commande de l'unité centrale (4), des messages mémorisés de manière

permanente, un module (8) pour l'enregistrement de messages vocaux non permanents à partir des moyens de captage de la parole ou du radiotéléphone et pour la lecture desdits messages par l'intermédiaire du radiotéléphone ou de moyens (9-10) de restitution d'information vocale dans ledit milieu de l'utilisateur, des moyens (11) de sélection de modes de fonctionnement du système et un module d'interface (6) piloté par l'unité centrale pour commander les liaisons entre lesdits modules et moyens du système.

2. Système selon la revendication 1, caractérisé en ce que lesdits moyens (11) de sélection comprennent un moyen de sélection, d'une part, d'un mode manuel pour l'apprentissage (108, 109) dudit vocabulaire de commande par le module (3) de reconnaissance de la parole, ainsi que pour la modification d'un répertoire desdits mots-clés (110, 111) et la mise à jour d'un bloc-note desdits messages non permanents (112, 113) stockés dans ledit module (8) d'enregistrement et de lecture des messages non permanents, et d'autre part, d'un mode automatique pour la commande, au moyen dudit vocabulaire, de l'établissement automatique d'une communication téléphonique (103) par l'unité centrale (4), de la lecture du répertoire (104) mémorisé dans ledit module (8) d'enregistrement et de lecture de messages vocaux non permanents, de l'enregistrement de messages du bloc-note dans le module (8) d'enregistrement et de lecture de messages vocaux non permanents et de l'émission d'instructions d'utilisation dudit système sous forme vocale par le module (7) de synthèse de la parole figée.

3. Système selon la revendication 2, caractérisé en ce que lesdits moyens (11) de sélection comprennent un moyen de sélection d'un mode normal de fonctionnement commandant l'inhibition desdits modules de reconnaissance (3) et de synthèse (7) de la parole pour l'établissement d'une communication téléphonique entre l'utilisateur et un correspondant sur appel de ce dernier, et d'un mode de fonctionnement en veille autorisant la lecture et/ou l'enregistrement de messages du bloc-note par ledit correspondant au moyen dudit module (8) d'enregistrement et de lecture de messages vocaux non permanents.

4. Système selon la revendication 3, caractérisé en ce qu'il comprend des moyens (216) de détection d'un code confidentiel émis par un correspondant pour la lecture et/ou l'enregistrement de messages du bloc-note par ledit correspondant au moyen du module (8) d'enregistrement et de lecture de messages vocaux non permanents.

5. Système selon l'une quelconque des revendications 2 à 4, caractérisé en ce que lesdits moyens (11) de sélection sont des contacts à commande manuelle et comprennent un contact de commande d'enregistrement, par l'utilisateur, de messages de bloc-note dans le module (8) d'enregistrement et de lecture de messages vocaux non permanents et un contact de commande d'interruption de communication téléphonique.

6. Système selon l'une quelconque des revendications 1 à 5, caractérisé en ce qu'il comprend un haut-parleur d'écoute confidentielle (14) et les moyens de sélection (11) comprennent un moyen de sélection d'écoute générale et d'écoute confidentielle par l'utilisateur de l'une quelconque des sources sonores générées par le système.

7. Système selon l'une quelconque des revendications 1 à 6, caractérisé en ce que le module de reconnaissance de la parole (3) est du type monolocuteur à mots isolés.

8. Système selon l'une quelconque des revendications 1 à 7, caractérisé en ce que le module (7) de synthèse de la parole figée est du type à prédiction linéaire.

9. Système selon l'une quelconque des revendications 1 à 8, caractérisé en ce que le module (8) d'enregistrement et de lecture de messages vocaux non permanents comprend un circuit de modulation-démodulation delta.

10. Système selon la revendication 9, caractérisé en ce que le module (8) d'enregistrement et de lecture de messages vocaux non permanents comprend également un magnétophone.

11. Système selon l'une quelconque des revendications 1 à 10, caractérisé en ce que les moyens de restitution d'information vocale comprennent l'ensemble amplificateur-haut-parleur(s) d'un autoradio.

**Patentansprüche**

1. Akustisch gesteuertes Rundfunk-Fernsprechsystem, insbesondere für Kraftwagen, mit einem Autotelefon (12), das mit einer Spracherkennungsanordnung (1-3) verbunden ist, dadurch gekennzeichnet, daß die Spracherkennungsanordnung eine Anordnung (1, 2) enthält, um die Sprache eines Benutzers in lärmerfüllter Umgebung aus der Ferne zu empfangen, zu verarbeiten und zu übertragen, ein Modul (3) zur Erkennung eines vom Benutzer stammenden Steuervokabulars enthält für unterschiedliche Betriebsweisen des Systems eine Zentraleinheit (4) enthält, die mit dem Modul (3) zur Spracherkennung verbunden ist, sowie mit einer Speicheranordnung (5) zur Steuerung der automatischen Telefonnummernzusammensetzung für das Autotelefon als Funktion der Erkennung durch das Modul (3) der Nummern oder von Schlüsselworten, die gespeicherten Telefonnummern zugeordnet sind, ein Modul (7) enthält, zum Aufbau von künstlicher Sprache, um so unter dem Einfluß der Zentraleinheit (4) permanent gespeicherte Mitteilungen zu erzeugen, ein Modul (8) enthält, zur nichtpermanenten Speicherung stimmlicher Mitteilungen, ausgehend von einer Anordnung zur Aufnahme der Sprache oder des Autotelefons und zum Auslesen der Mitteilungen mittels des Autotelefons oder einer Anordnung (9-10) zur Wiederherstellung der stimmlichen Information in der Umgebung des Benutzers, eine Anordnung 11 enthält zur Auswahl der Betriebsweise des Systems und ein Schnittstellenmodul (6) enthält, das von der Zentraleinheit (4) gesteuert wird, um die Verbindungen zwischen den einzelnen Modulen und Systemanordnungen zu steuern.

2. System nach Anspruch 1, dadurch gekennzeichnet, daß die Auswahlanordnung (11) einerseits eine Auswahlanordnung für eine manuelle Betriebsweise aufweist, zum Einstudieren (108, 109) des Steuervokabulars mittels des Moduls (3) zur Spracherkennung sowie zur Veränderung des Repertoirs der Schlüsselworte (110, 111) und zur Vervollständigung der Aufzeichnung der nichtpermanenten Mitteilungen (112, 113), die in dem Modul (8) zur Speicherung und zum Auslesen der nichtpermanenten Mitteilungen gespeichert sind und andererseits für eine automatische Betriebsweise zur Steuerung mittels des Vokabulars der automatischen Erstellung einer Telefonverbindung (103) durch die Zentraleinheit (4), des Auslesens des Repertoirs (104), das im Modul (8) für die Speicherung und für das Auslesen der nichtpermanenten stimmlichen Mitteilungen gespeichert ist, des Speicherns der Mitteilungen der Aufzeichnung im Modul (8) für die Speicherung und das Auslesen der nichtpermanenten stimmlichen Mitteilungen und der Ausgabe von Benutzervorschriften des Systems in stimmlicher Form durch das Modul (7) zum Aufbau künstlicher Sprache.

3. System nach Anspruch 2, dadurch gekennzeichnet, daß die Auswahlanordnung (11) eine Auswahlanordnung für eine normale Betriebsweise enthält, zur Sperrung der Module für die Spracherkennung (3) und für den Aufbau (7) zur Herstellung einer Telefonverbindung zwischen dem Benutzer und einen angerufenen Gesprächspartner und für eine Betriebsweise unter Aufsicht, die das Auslesen und/oder die Speicherung der Mitteilungen der Aufzeichnungen ermöglicht durch den Gesprächspartner mittels des Moduls (8) zur Speicherung und zum Auslesen nichtpermanenter stimmlicher Mitteilungen.

4. System nach Anspruch 3, dadurch gekennzeichnet, daß es eine Anordnung (216) zur Feststellung eines Vertraulichkeitscodes enthält, zum Auslesen und/oder Speichern von Mitteilungen der Aufzeichnungen, der durch den Gesprächspartner mittels des Moduls (8) zum Speichern und zum Auslesen nichtpermanenter stimmlicher Mitteilungen übertragen wird.

5. System nach einem der Ansprüche 2 bis 4, dadurch gekennzeichnet, daß die Auswahlanordnung (11) aus manuellen Steuerschaltern besteht und einen Steuerschalter enthält für das Einspeichern durch den Benutzer von Mitteilungen der Aufzeichnungen in das Modul (8) zum Speichern und zum Auslesen nichtpermanenter stimmlicher Mitteilungen und eine Steuerschaltung enthält für das Beenden der Telefonverbindung.

6. System nach einem der Ansprüche 1 bis 5, dadurch gekennzeichnet, daß es einen Lautsprecher (14) für vertrauliches Abhören enthält und daß die Auswahlanordnung (11) eine Auswahlanordnung für allgemeines Hören oder vertrauliches Abhören durch den Benutzer enthält einer der beiden vom System bereitgestellten Schallquellen.

7. System nach einem der Ansprüche 1 bis 6, dadurch gekennzeichnet, daß das Modul zur Spracherkennung (3) vom Typ für einen Einheitssprecher mit einzelnen Worten ist.

8. System nach einem der Ansprüche 1 bis 7, dadurch gekennzeichnet, daß das Modul (7) zum Aufbau der künstlichen Sprache vom Typ linearer Aussprache ist.

9. System nach einem der Ansprüche 1 bis 8, dadurch gekennzeichnet, daß das Modul (8) zum Speichern und zum Auslesen nichtpermanenter stimmlicher Mitteilungen einen delta-Modulations-Demodulations-Schaltkreis enthält.

10. System nach Anspruch 9, dadurch gekennzeichnet, daß das Modul (8) zum Speichern und zum Auslesen nichtpermanenter stimmlicher Mitteilungen außerdem ein Tonbandgerät enthält.

11. System nach einem der Ansprüche 1 bis 10, dadurch gekennzeichnet, daß die Anordnung zur Wiederherstellung stimmlicher Informationen die Anordnung Verstärker-Lautsprecher eines Autoradios aufweist.

**Claims**

1. A voice control radiotelephone system in particular for a motor vehicle comprising an actual radiotelephone (12) associated with a word recognition system (1-3) characterised in that the word recognition system comprises means (1, 2) for remotely picking up, processing and transmitting the word of a user who is in disturbed surroundings, and a module (3) for recognition of a vocabulary for control by the user of different modes of operation of the system, a central unit (4) connected to said word recognition module (3) and to an assembly of memories (5) for controlling the automatic selection of telephone numbers on the radiotelephone in response to recognition by said module (3) of the numbers or keywords associated with memorised telephone numbers, a fixed word synthesis module (7) which is adapted to generate under the control of the central unit (4) permanently memorised messages, a module (8) for recording non-permanent voice messages from the word pickup means or the radio telephone and for reading said messages by way of the radiotelephone or means (9-10) for the restitution of voice information in said surroundings of the user, means (11) for selecting modes of operation of the system, and an interface module (6) pilot-controlled by the central unit to control the connections between said modules and means of the system.

2. A system according to claim 1 characterised in that said selection means (11) comprise a means for selection on the one hand of a manual mode for the learning operation (108, 109) of said control vocabulary by the word recognition module (3) and for modification of a directory of said keywords (110, 111) and the updating of a notepad in respect of said non-permanent messages (112, 113) stored in said module (8) for recording and reading non-permanent messages, and on the other hand an automatic mode for the control by means of said vocabulary of the automatic establishment of a telephone communication (103) by the central unit (4), reading of the directory (104) stored in said module (8) for recording and reading non-permanent voice messages, recording of messages of the notepad in the module (8) for recording and reading non-permanent voice messages, and emission of instructions for use of said system in voice form by the fixed word synthesis module (7).

3. A system according to claim 2 characterised in that said selection means (11) comprise a means for selection of a normal mode of operation causing inhibition of said word recognition and synthesis modules (3 and 7 respectively) for the establishment of a telephone communication between the user and another party upon calling of the latter, and a waiting mode of operation permitting reading and/or recording of messages of the notepad by said other party by means of said module (8) for recording and reading non-permanent voice messages.

4. A system according to claim 3 characterised in that it comprises means (216) for detecting a confidential code emitted by another party for reading and/or recording messages of the notepad by said other party by means of the module (8) for recording and reading non-permanent voice messages.

5. A system according to any one of claims 2 to 4 characterised in that said selection means (11) are manual control switches and comprise a switch for controlling recording by the user of notepad messages in the module (8) for recording and reading non-permanent voice messages and a switch for controlling an interruption in the telephone communication.

6. A system according to any one of claims 1 to 5 characterised in that it comprises a loudspeaker (14) for confidential listening and the selection means (11) comprise means for selecting general listening and confidential listening by the user to any one of the sound sources generated by the system.

7. A system according to any one of claims 1 to 6 characterised in that the word recognition module (3) is of the isolated-word mono-speaker type.

8. A system according to any one of claims 1 to 7 characterised in that the fixed word synthesis module (7) is of the linear prediction type.

9. A system according to any one of claims 1 to 8 characterised in that the module (8) for recording and reading non-permanent voice messages comprises a delta modulation-demodulation circuit.

10. A system according to claim 9 characterised in that the module (8) for recording and reading non-permanent voice messages also comprises a tape recorder.

11. A system according to any one of claims 1 to 10 characterised in that the voice information restitution means comprise the amplifier-loudspeaker(s) assembly of a car radio.

Fig. 1

0 177 405

Fig. 2

Fig.3

Fig.4

Fig.6

FIG. 5

Modification + ? — 130 — non / oui

Répertoire plein ? — 131 — oui

Indication répertoire plein — 132

Prononcez votre mot - clé — 133

Bien appris ? — 134 — non / oui

Enumération du numéro de téléphone — 135

Chiffre bien appris ? — 136 — non / suivant

Autre mot - clé ? — 137 — oui / non

Répertoire vide ? — 138 — oui / non

Indications sur le mot - clé — 139

Effacement ? — 140 — non / oui

Mise à jour — 141

142 — suivant

Modification + ? — 143

9

Fig.8

- 170 — Vide ?
  - oui → 171 — Indications bloc-note vide → (retour sur test M/A)
  - non → 172 — Indications sur exploitations du mode → 173 — Indications sur le message → 174 — Effacement ?
    - oui → 175 — Mises à jour
    - non → 176 — Dernier message ?
      - oui → 177 — Indications sur fin des messages
      - non →

Fig.7

- 160 — Indications pour exploiter le téléphone → 161 — Chiffre ?
  - oui → 163 — Composition d'un numéro → 164 — Exploitation pour établir une communication téléphonique → 165 → (retour sur le test M/A)
  - non → 162 — Exploitation du répertoire

Fig.9

*180* Bloc-note plein?

oui

*181* Indications bloc-note plein

(retour vers test M/A)

non

*182* Indications sur le temps qui reste

*183* Effacement? — oui → *184*

non

*185* Indication sur exploitation du mode

*186* Armement temporisation

*187* Temporisation terminée? — (test M/A)

non

*188* Départ enregistrement? — non

*189* Bloc-note plein? — oui

non

*190* Acquisition en synthèse

*191* Toujours enregistrement? — oui

non

*192* Arrêt acquisition

Fig. 10

200
Buffer tampon
contenant le numéro

201
Arrêts synthèses
et reconnaissance

202
Etablissement
de la
communication
téléphonique

203
Conversation
téléphonique

204
Vers le test M/A

Fig. 11

**210** Appel extérieur

**211** Veille ?
— non

**212** Arrêt synthèses et reconnaissance

**213** Etablissement communication téléphonique

Conversation téléphonique **214**

**215**

(test $M/A$)

— oui

**216** Code confidentiel ?
— oui

— non

**217** Temporisation?
— oui

— non

**218** Indications d'exploitation

**219** Exploitation publique

**220**
**221** (test $M/A$)

**222** Exploitation confidentielle

**223**
**224** (test $M/A$)